Europäisches Patentamt

European Patent Office

Office européen des brevets

(11) Veröffentlichungsnummer: **0 083 906**
**A1**

(12) **EUROPÄISCHE PATENTANMELDUNG**

(21) Anmeldenummer: **82810432.3**

(22) Anmeldetag: **18.10.82**

(51) Int. Cl.³: **A 61 C 7/00**

(30) Priorität: **17.12.81 CH 8051/81**

(43) Veröffentlichungstag der Anmeldung:
**20.07.83 Patentblatt 83/29**

(84) Benannte Vertragsstaaten:
**AT DE FR IT NL**

(71) Anmelder: **Lohner, Richard**
**Sandrainstrasse 71**
**CH-3007 Bern(CH)**

(72) Erfinder: **Lohner, Richard**
**Sandrainstrasse 71**
**CH-3007 Bern(CH)**

(54) **Kieferdehnschraube.**

(57) Bei dieser Kieferdehnschraube sind an einem Mittelstück (1) zwei relativ zu diesem verschraubbare Backen (6, 7) vorgesehen. An beiden Enden des Mittelstückes sind Fortsätze (4, 4a, 5, 5a) angebracht, welche um zur Achse der Schraubenspindel (12) parallele Achsen (13, 14) verschwenkbar sind. Wenn diese Dehnschraube in eine Gaumenplatte aus Kunststoff eingebettet ist, kann die Platte durch vier Sägeschnitte so unterteilt werden, dass vier in weiten Grenzen wählbare Abschnitte entstehen, von denen zwei mit den beweglichen Backen und zwei mit den Fortsätzen verankert sind. Durch die schwenkbare Anordnung der Fortsätze können diese vor dem Eingiessen relativ zum Mittelstück so abgewinkelt werden, dass das Längsprofil der Schraube weitgehend dem Verlauf der Gaumenpartie entspricht, für die es bestimmt ist. Dadurch wird es ermöglicht, die Gaumenplatte mit minimaler Dicke auszuführen, was für den Träger eine grosse Annehmlichkeit bedeutet.

Fig.1

Fig.2

EP 0 083 906 A1

# Kieferdehnschraube

Die Erfindung betrifft eine Kieferdehnschraube, bei der in einem Mittelstück eine Gewindespindel drehbar, aber in axialer Richtung nicht verschiebbar, gelagert ist. Auf der Gewindespindel sitzen beidseits des Mittelstückes zwei Verankerungsbacken, die beim Drehen der Spindel gegensinnig nach aussen verschoben werden. Diese Kieferdehnschrauben werden in Kunststoff derart eingegossen, dass nur die beweglichen Backen im Kunststoff verankert sind. Teilt man dann die Kunststoffplatte durch einen Sägeschnitt so, dass die beiden Backen in je einem dieser Teile liegen, dann erhält man eine Kieferdehnplatte für den Oberkiefer, wie sie beispielsweise in der CH PS 577309 beschrieben ist. Beim Drehen der Schraubenspindel verschieben sich die beiden Backen nach aussen und mit ihnen die beiden Teile der Kunststoffplatte, wodurch der für die Regulierung der Zähne erforderliche Druck auf verschiedene Zahnpartien erzeugt wird. Es ist klar, dass bei der Anordnung mit einer Kieferdehnschraube jeweils nur zwei Teile der Platte relativ zueinander verschoben werden können. Will man mehr als zwei Teile der Platte gegeneinander verschieben, dann muss man mehrere Dehnschrauben anwenden, wie dies beispielsweise in Fig. 10 der genannten CH PS dargestellt ist.

Es sind auch Kieferdehnschrauben bekannt, bei denen wie in Fig. 3 gezeigt, mit dem Mittelstück starr verbundene Fortsätze vorhanden sind. Man trennt nun durch zwei Sägeschnitte die Kunststoffplatte, in welcher die Dehnschraube eingegossen ist so auf, dass ein Abschnitt mit den Fortsätzen, und damit mit dem Mittelstück, während die beiden anderen Abschnitte mit den beiden beweglichen Backen verbunden sind. Beim Verschrauben wirkt der ausgeübte Druck nur auf die beiden Zahnpartien, die unter der Wirkung derjenigen Plattenpartien stehen, die mit den Backen verankert sind. Der Plattenteil, der mit den Fortsätzen des Mittelstückes verbunden ist und die mit diesem in Eingriff stehende Zahnpartie bleibt somit von der Backenbewegung unbeeinflusst.

BAD ORIGINAL

0083906

Die Erfindung stellt sich die Aufgabe eine Dehnschraube zu schaffen, bei der die Möglichkeit besteht, die Beeinflussung mehrer Zahnpartien unabhängig voneinander, wesentlich vielgestaltiger zu machen, und die es im weiteren gestatten die Kunststoffplatte dünner als bisher zu gestalten. Dies wird durch Verwendung einer erfindungsgemäss ausgebildeten Kieferdehnschraube erreicht, bei welcher das Mittelstück an seinen beiden Enden mit gegenüber seinem zentralen Teil schwenkbar angeordneten Verankerungsfortsätzen versehen ist. Dadurch besteht die Möglichkeit die Kunststoffplatte in sehr unterschiedlicher Weise aufzuteilen, wobei zwei von einander getrennte Bereiche über die beiderends angeordneten Fortsätze mit dem Mittelstück, und dazwischenliegende Bereiche , die sehr unterschiedlich wählbare Zahnpartien erfassen können, mit den beiden beweglichen Backen verbunden sind. Durch die schwenkbare Anordnung der Fortsätze wird erreicht, dass die Gaumenplatte mit minimaler Dicke ausgeführt werden kann. Anhand der Zeichnung wird ein Ausführungsbeispiel der Kieferdehnschraube und einige ihrer Anwendungsmöglichkeiten erläutert.

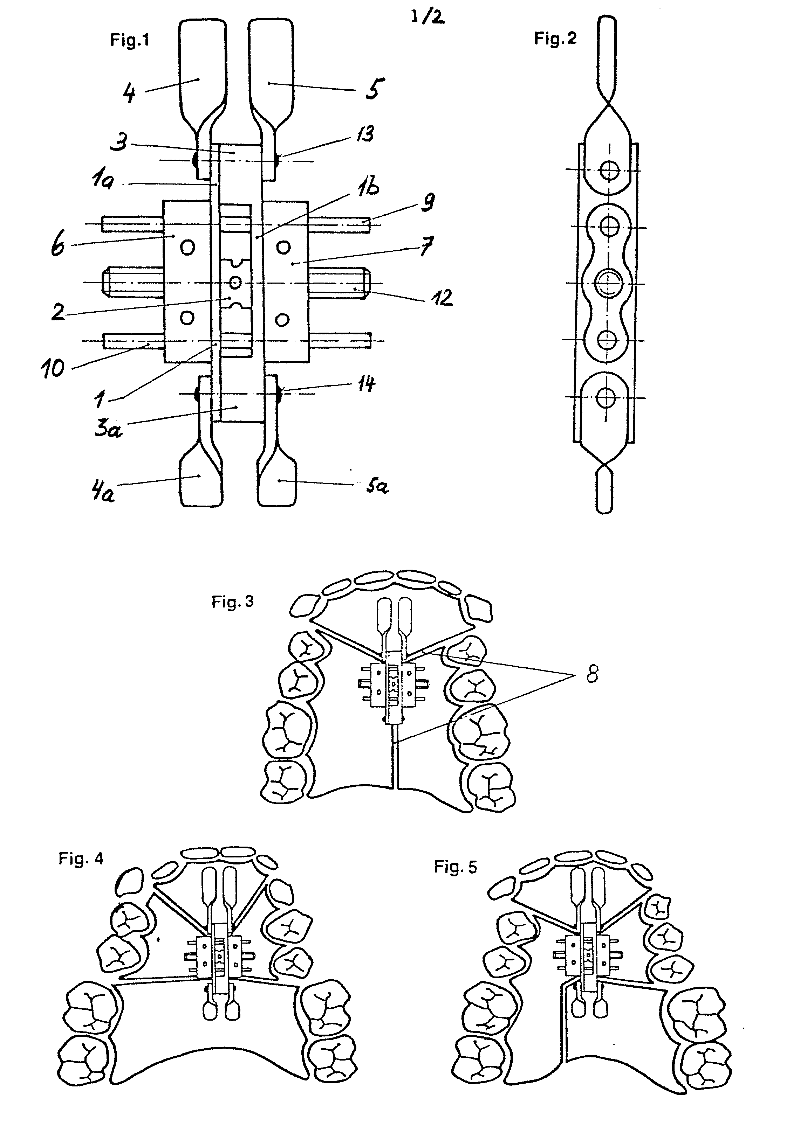

Fig. 1 und 2 zeigen die Kieferdehnschraube von oben bzw. von der Seite gesehen.

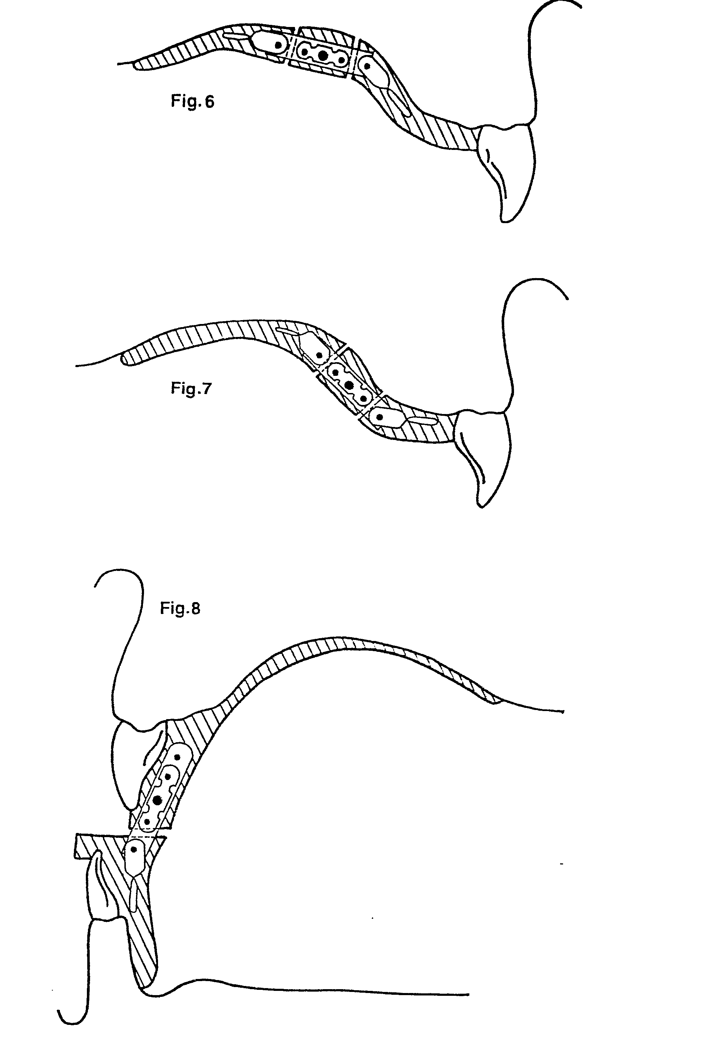

Fig. 3 zeigt die Anwendung einer bekannten Schraube, Fig. 4 und 5 einige Anwendungen einer erfindungsgemässen Schraube, Fig. 6 und 7 Längsschnitte durch eine am Gaumen angeordnete Kieferdehnplatte, Fig. 8 den Längsschnitt eines Aktivators. In Fig. 1 ist im Mittelstück eine Lochmutter eingeschlossen, in deren Bohrungen ein Stift zum Drehen der Schraubenspindel einsetzbar ist. An beiden Enden trägt das Mittelstück die Verankerungsfortsätze 4,5 bzw. 4a, 5a, welche einzeln um Achsen 13, 14 schwenkbar sind und bei der fertigen Kieferdehnplatte vollständig in Kunststoff eingebettet sind. In dem in Fig. 1 dargestellten Fall besteht das Mittelstück aus zwei Metallstreifen 1a, 1b, die durch mit ihnen fest verbundene Distanzstücke 3, 3a im Abstand gehalten werden. Die Verankerungsfortsätze sind durch kurze Streifenstücke gebildet, von ihrer Drehachse ausgehend um 90° umgebogen sind. Die Lochmutter 12 ist zwischen den Streifen 1, 1a axial unverschiebbar gehalten. Beidseits des

BAD ORIGINAL

Mittelstückes sind die Backen 6, 7 angeordnet und durch Innengewinde mit der Spindel 12 gekuppelt. Die Backen sind ausserdem
durch zwei Führungsstifte 9, 10 parallel zum Mittelstück geführt. In Fig. 4 und 5 sind einige Anwendungsmöglichkeiten der
neuen Dehnschraube gezeigt.
Durch geeignete Anordnung der Sägeschnitte 8 in der Kunststoffplatte ist es wie dargestellt möglich, die Wirkung der Dehnschraube auf sehr unterschiedliche Zahnbereiche einzustellen.

Bei Bedarf ist es natürlich auch möglich, einzelne der Fortsätze, wie in Fig. 3 gezeigt, abzutrennen.
Die Fig. 6 und 7 veranschaulichen, wie es dank der gelenkigen
Anordnung der Fortsätze 4, 5 am Mittelstück möglich ist, den
Längsverlauf der Kieferdehnschraube der Gaumenform anzupassen.
Wie aus diesen Figuren ohne weiteres erkennbar, kann die Kunststoffplatte, in zwei starre und zwei bewegliche Teile geschnitten, sehr dünn ausgeführt werden. Es ist klar, dass das Tragen
der Dehnplatte umso weniger störend ist, je dünner sie gestaltet wird.

Patentanspruch

Kieferdehnschraube, die zum Eingiessen in eine Kunststoff-
Kieferdehnplatte bestimmt ist, mit einer an einem Mittelstück (1) axial unverschiebbar gelagerten Schraubenspindel
(12), mittels der zwei beidseitig des Mittelstückes angeordneten Backen (6,7) symmetrisch inbezug auf das Mittelstück verschiebbar sind, dadurch gekennzeichnet, dass das
Mittelstück (1) an beiden Enden mit gegenüber seinem zentralen Teil schwenkbar angeordneten Verankerungsfortsätzen
(4, 4a, 5, 5a) versehen ist.

Fig.1

Fig.2

Fig. 3

Fig. 4

Fig. 5

Fig. 6

Fig. 7

Fig. 8

0083906

Europäisches
Patentamt

**EUROPÄISCHER RECHERCHENBERICHT**

Nummer der Anmeldung

EP 82 81 0432

## EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int. Cl. ³) |
|---|---|---|---|
| A | AT-B- 192 049 (FISCHER) <br> * Seite 1, Zeilen 31-46; Figuren 1, 2, 6 * <br> --- | 1 | A 61 C 7/00 |
| A | DE-B-2 741 188 (DENTAURUM HANS-PETER WINKELSTROETER KG.) <br> * Spalte 2, Zeile 19 - Spalte 3, Zeile 6; Figuren 1, 2 * <br> --- | 1 | |
| A | DE-B-2 703 820 (B. FÖRSTER GMBH) <br> * Spalte 1, Zeile 39 - Spalte 2, Zeile 6; Figuren 1, 2 * <br> --- | 1 | |
| A | DE-U-6 750 072 (SCHEU) <br> * Seite 4, Zeilen 1-8; Figuren 1, 2 * <br> --- | 1 | RECHERCHIERTE SACHGEBIETE (Int. Cl. ³) |
| D,A | CH-A- 577 309 (FIRMA B. FÖRSTER) <br><br> ----- | | A 61 C 7/00 |

Der vorliegende Recherchenbericht wurde für alle Patentansprüche erstellt.

| Recherchenort <br> BERLIN | Abschlußdatum der Recherche <br> 10-03-1983 | Prüfer <br> SIMON J J P |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82